# EUROPÄISCHE PATENTANMELDUNG

(11) **EP 4 846 846 A1**
(43) Veröffentlichungstag der Anmeldung: **02.12.2026**
(21) Anmeldenummer: 25178889.9
(22) Anmeldetag: 26.05.2025
(51) Int. Cl.: A01N 25/04, A01N 25/28, A01N 63/12, A01P 7/04

(54) **NEMATODEN-MATRIXKAPSELN**

(71) Anmelder: Katz Biotech AG, 15837 Baruth/Mark (DE)
(72) Erfinder: Hellmund, Markus, 12305 Berlin (DE); Hoff, Christoph, 14473 Potsdam (DE); Rademacher, Jörg, 12277 Berlin (DE)
(74) Vertreter: Sacht-Gorny, Gudrun

(57) **Zusammenfassung**

Es wird ein Verfahren zur Herstellung von Nematoden-Matrixkapseln vorgeschlagen, wobei das Verfahren die folgenden Schritte umfasst: Es wird eine Emulsion bereitgestellt, die eine Ölkomponente und eine wässrige Komponente sowie mindestens einen Stabilisator, vorzugsweise Kieselsol, umfasst. Die Emulsion wird mit einem Hydrogelbildner versetzt. Die Emulsion wird mit Nematoden zur Bereitstellung eines Nematodenansatzes versetzt. Der Nematodenansatz wird in eine Vernetzungslösung zur Ausbildung der Nematoden-Matrixkapseln eingetropft. Die derart herstellbaren Nematoden-Matrixkapseln sind in besonderer Weise für die biologische Schädlingsbekämpfung geeignet.

## Beschreibung

Die vorliegende Erfindung betrifft ein Verfahren zur Herstellung von Nematoden-Matrixkapseln zur Bekämpfung von Schädlingen, wobei die Matrixkapseln entomopathogene Nematoden enthalten. Weiterhin betrifft die Erfindung derartige Matrixkapseln sowie ein Verfahren zur Schädlingsbekämpfung, bei dem diese Matrixkapseln in ein Pflanzsubstrat oder in einen Pflanzenbestand ausgebracht werden.

Nematoden (Fadenwürmer) sind fadenförmige Bodenlebewesen. Sie gehören zu den artenreichsten mehrzelligen Lebewesen unserer Erde und kommen in allen erdenklichen Lebensräumen natürlicherweise vor. Als entomopathogene (entomon - griech. für Insekt) Nematoden (EPN) werden solchen Nematoden bezeichnet, die als natürliche Feinde von Insekten wirken und dabei die Insekten in der Regel als Wirtsorganismen nutzen oder allgemein schädigen. Die Bezeichnung entomopathogene Nematoden schließt im Sprachgebrauch der biologischen Schädlingsbekämpfung auch parasitäre Nematoden von Schnecken mit ein, da diese in ihrer Biologie, Vermehrung, Anwendung und Wirkung mit den insektenpathogenen Nematoden vergleichbar sind. Der Begriff der entomopathogenen Nematoden ist daher etwas weiter zu fassen, sodass hiervon nicht nur Nematoden umfasst sind, die Insekten schädigen. Neben den schneckenschädigenden Nematoden können hierunter beispielsweise auch räuberische Nematoden zu verstehen sein, die ihre Beute, beispielsweise andere Nematoden, aktiv erjagen und die ebenfalls in der biologischen Schädlingsbekämpfung, beispielsweise zur Bekämpfung von wurzelschädigenden Nematoden, eingesetzt werden können.

Oftmals sind bestimmte Nematoden auf bestimmte Insekten oder Schnecken hoch spezialisiert, sodass sie nur die jeweiligen Arten befallen und damit für den Menschen, warmblütige Tiere und Pflanzen harmlos sind. Diese Eigenschaft macht die entomopathogenen Nematoden besonders geeignet für eine biologische Schädlingsbekämpfung.

Mittlerweile gehören die Nematoden im biologischen Pflanzenschutz zu den wichtigsten Gegenspielern von Insekten und Schnecken, die sich im oder auf dem Pflanzsubstrat (zum Beispiel Torf, Kompost, Mineralstoffe, Kunststoffe) aufhalten. In diesem Zusammenhang spielen vor allem die Larvenstadien vieler Käfer (Engerlinge) oder Fliegen (Maden) eine große Rolle, da diese Larvenstadien die Pflanze im Wurzelbereich erheblich schädigen können. Darüber hinaus können auch oberirdisch schädigende Insekten und Schnecken mithilfe von Nematoden bekämpft werden, wenn sich die Tiere zum Beispiel zur Verpuppung oder Eiablage in den Boden begeben, auf dem Boden bewegen oder auf einem anderen Weg für die Nematoden erreichbar sind. In der Regel suchen die entomopathogenen Nematoden ihre jeweiligen Wirtsorganismen aktiv auf und dringen in sie ein, sodass beispielsweise die befallenen Tiere (z. B. Larven) innerhalb von zwei bis drei Tagen in der Regel absterben. Die Nematoden vermehren sich anschließend in den Kadavern und befallen dann weitere lebende Larven bzw. die jeweiligen Wirtsorganismen. Dieser Prozess setzt sich so lange fort, bis keine lebenden Wirtsorganismen mehr von den Nematoden gefunden werden.

In der biologischen Schädlingsbekämpfung werden entomopathogene Nematoden bereits beispielsweise zur Bekämpfung der Engerlinge von Gartenlaubkäfer, Junikäfer, Dickmaulrüssler und Maiswurzelbohrer sowie zur Bekämpfung der Maden der Wiesenschnake und der Trauermücke sowie zur Bekämpfung der Raupen des Eichenprozessionsspinners, des Apfelwicklers und der Eulen-/Nachtfalter sowie zur Bekämpfung der Larven und Puppen von Thripsen sowie zur Bekämpfung von Acker- und Wegschnecken eingesetzt. Die Anwendungsbereiche liegen hierbei in der Pflege von Rasen und öffentlichem Grün, in Baumschulen, im Obstbau, im Gemüse-, Kräuter- und Zierpflanzenbau sowie im Maisanbau. Zu diesen Zwecken werden insbesondere die Nematodenarten *Heterorhabditis bacteriophora, Heterorhabditis downesi, Steinernema feltiae, Steinernema carpocapsae, Steinernema kraussei* und *Phasmarhabditis hermaphrodita* eingesetzt.

Die kommerzielle Massenproduktion von entomopathogenen Nematoden (EPN) erfolgt in der Regel mittels mikrobiologischer Verfahren in Flüssigkultur-Bioreaktoren (Fermentern). Nach der Vermehrung werden die Nematoden bevorzugt in Diatomeenerde eingebracht, beispielsweise etwa 7.500.000 Tiere/g. Diese Diatomeenerde dient als Trägermaterial, das in Beuteln portioniert werden kann. Bis zur Anwendung erfolgt zweckmäßigerweise eine gekühlte Lagerung zwischen etwa 4°C und 10°C. Für die überwiegende Anzahl der Schädlinge, die sich im Pflanzsubstrat aufhalten können, beträgt die bevorzugte Aufwandmenge nach derzeitigen Empfehlungen etwa 500.000 EPN/m².

Bei einer herkömmlichen Anwendung wird das Produkt, also die Mischung aus EPN und Diatomeenerde, in Wasser dispergiert und mittels Gieß- oder Sprühapplikation auf der zu behandelnden Fläche ausgebracht. Die benötigte Wassermenge beträgt abhängig vom Applikationsverfahren, den Umweltbedingungen und der zu behandelnden Kultur beispielsweise zwischen 100 und 5.000 ml/m². Um ein Absinken der Nematoden in der Dispersion zu verhindern, sollte die Dispersion während der Ausbringung regelmäßig durch Rühren oder Schütteln durchmischt werden. Dabei sollten jedoch starke Scherkräfte vermieden werden, um die Nematoden nicht zu schädigen. Nach der Behandlung muss das Pflanzsubstrat während des Bekämpfungszeitraums ausreichend feucht gehalten werden, da die Nematoden andernfalls schnell austrocknen können. Zudem können sich die Nematoden nicht auf trockenen Oberflächen bewegen, sodass das Aufsuchen der Wirte erschwert wird. Allerdings kann es durch übermäßiges Gießen zu einem Ausschwemmen der Nematoden kommen, wodurch die Wirkung der Nematoden erheblich reduziert wird.

In der Regel erfolgt die Behandlung mit entomopathogenen Nematoden zum Zeitpunkt des ersten Auftretens der zu bekämpfenden Schädlingsstadien. Ohne vorhandene Schädlinge können die entomopathogenen Nematoden in der Regel nur einige Tage im Substrat überdauern. Insgesamt erfordert eine erfolgreiche Behandlung mit entomopathogenen Nematoden also zum einen den richtigen Behandlungszeitpunkt, eine wirksame Applikationsmethode sowie eine ausreichende Feuchte des Pflanzsubstrats während des gesamten Bekämpfungszeitraums. In der Regel muss die Behandlung in regelmäßigen Abständen wiederholt werden.

Es existieren bereits Ansätze, entomopathogene Nematoden in anderen Darreichungsformen in einen Pflanzenbestand einzubringen. So beschreibt beispielsweise das Patent US 4,753,799 eine Verkapselung von Nematoden auf der Basis von Alginat.

Zur Reduzierung von Wasserverlusten können die Kapseln beschichtet sein. Die WO 2016/176764 A1 hat ebenfalls Alginat-Kapseln mit Nematoden zum Gegenstand. Die Alginat-Kapseln werden mit Cellulose beschichtet und getrocknet. Hierdurch soll eine Langzeitlagerung über mehrere Monate hinweg möglich sein. Problematisch bei derart verkapselten Nematoden ist jedoch, dass die Wirkung der ausgebrachten Kapseln bei der Schädlingsbekämpfung immer verhältnismäßig kurz ist. So beschreibt die WO 2016/176764 A1, dass die Kapseln innerhalb von einem Tag bis zu einer Woche abgebaut werden. Auch die Freisetzungsversuche, die in der US 4,753,799 angesprochen sind, werden nur für einen Zeitraum von 24 bis 48 Stunden durchgeführt.

Aus der internationalen Patentanmeldung WO 2021/180272 A1 sind Flüssigkernkapseln bekannt, die einen flüssigen Kern und eine Alginathülle aufweisen. In dem flüssigen Kern befinden sich entomopathogene Nematoden, die in einer Emulsion aus Öl und einer wässrigen Flüssigkeit vorliegen. Diese Flüssigkernkapseln haben verschiedene Vorteile im Hinblick auf die Lagerfähigkeit und die Vitalität der Nematoden. Allerdings ist die mechanische Stabilität dieser Flüssigkernkapseln insbesondere bei einer Verarbeitung im Zuge der Ausbringung der Flüssigkernkapseln unter Umständen unbefriedigend. Zudem ist die Herstellung dieser Flüssigkernkapseln verhältnismäßig aufwendig.

Die Erfindung stellt sich demgegenüber die Aufgabe, ein vereinfachtes Verfahren zur Herstellung von Nematoden-Kapseln bereitzustellen. Die herzustellenden Nematoden-Kapseln sollen dabei auf der einen Seite eine gute Vitalität und Effektivität der Nematoden bei der Schädlingsbekämpfung sicherstellen und auf der anderen Seite eine vorteilhafte Handhabung in der Anwendung erlauben.

Diese Aufgabe wird durch ein Verfahren zur Herstellung von Nematoden-Matrixkapseln gelöst, wie es sich aus dem Anspruch 1 ergibt. Bevorzugte Ausgestaltungen dieses Verfahrens sind Gegenstand der von Anspruch 1 abhängigen Ansprüche. Weiterhin wird diese Aufgabe durch Nematoden-Matrixkapseln und ein Verfahren zur Schädlingsbekämpfung gelöst, wie es sich aus den nebengeordneten Ansprüchen und den davon abhängigen Ansprüchen ergibt.

Das erfindungsgemäße Verfahren zur Herstellung von Nematoden-Matrixkapseln umfasst die folgenden Schritte:
a. Es wird eine Emulsion bereitgestellt, die eine Ölkomponente und eine wässrige Komponente sowie mindestens einen Stabilisator umfasst,
b. die Emulsion wird mit einem Hydrogelbildner versetzt,
c. die Emulsion wird mit Nematoden zur Bereitstellung eines Nematodenansatzes versetzt,
d. der Nematodenansatz wird in eine Vernetzungslösung zur Ausbildung der Nematoden-Matrixkapseln eingetropft.

Bei den erfindungsgemäß herstellbaren Nematoden-Matrixkapseln sind die Nematoden homogen in der gesamten Struktur der Kapseln verteilt. Der besondere Unterschied zu herkömmlichen Matrixkapseln mit Nematoden liegt darin, dass bei den erfindungsgemäß herstellbaren Matrixkapseln die Nematoden in einer Emulsion vorliegen, wodurch die Wirksamkeit dieser Matrixkapseln gegenüber herkömmlichen Matrixkapseln in der Anwendung im Pflanzenschutz verbessert wird.

Die erfindungsgemäß herstellbaren Matrixkapseln unterscheiden sich weiterhin grundlegend von den bekannten Flüssigkernkapseln, bei denen die Nematoden in einer Emulsion im Kern der Flüssigkernkapseln vorliegen.

Bei der Matrixverkapselung und der Flüssigkernverkapselung handelt es sich um zwei unterschiedliche Techniken mit spezifischen Vor- und Nachteilen. Während bei einer Flüssigkern-Verkapselung eine zentrale Wirkstoffeinlagerung mit separater Hülle vorliegt, ist die Matrixkapsel durch eine gleichmäßige Verteilung des Wirkstoffs in der gesamten Hydrogelstruktur gekennzeichnet.

Die Vorteile der Matrixverkapselung liegen zunächst in der homogenen Verteilung des Wirkstoffs, also der Nematoden. Die gleichmäßige Verteilung innerhalb der Matrix ermöglicht eine stabile und kontrollierte Freisetzung. Zudem zeichnen sich Matrixkapseln im Vergleich mit Flüssigkernkapseln durch eine erhöhte mechanische Stabilität aus. Da kein separater Kern existiert, sind Matrixkapseln weniger anfällig für mechanische Belastungen oder Risse. Anders als bei Flüssigkernkapseln kann kein ungewolltes Austreten des Kerns auftreten. Matrixkapseln erlauben eine besonders kontrollierte Wirkstofffreisetzung, da die Diffusion aus der gesamten Matrix erfolgt, wodurch eine gleichmäßigere Abgabe des Wirkstoffs erreicht wird.

Darüber hinaus erlaubt die Matrixverkapselung im Vergleich mit einer Flüssigkernverkapselung eine besonders kosteneffiziente Herstellung. Da bei dem erfindungsgemäßen Verfahren in eine Ionenlösung als Vernetzungslösung (insbesondere CaCl₂) und nicht wie bei der inversen Verkapselung für die Herstellung von Flüssigkernkapseln in eine Hydrogel-Lösung eingetropft wird, benötigt das erfindungsgemäße Verfahren nur einen Bruchteil, d. h. in der Regel weniger als 1 %, des Hydrogels (z. B. Alginat), welches für die inverse Verkapselung benötigt wird. Insgesamt erlaubt das erfindungsgemäße Verfahren eine einfache und besonders wirtschaftliche Produktion.

Ein besonderes Merkmal bei der Matrixverkapselung ist jedoch, dass sie im Allgemeinen nur für hydrophile Wirkstoffe geeignet ist, da das Hydrogel der Matrix eine hydrophile Umgebung schafft. Daher stößt die Herstellung von Matrixkapseln bei der Verwendung einer Emulsion als Träger für die Nematoden auf Probleme. Bei der Entwicklung des erfindungsgemäßen Herstellungsprozesses mussten daher besondere Maßnahmen ergriffen werden, um Nematoden-Matrixkapseln mit einer Emulsion in der Matrix herstellen zu können, die alle qualitativen Anforderungen für die Verwendung der Matrixkapseln in der Schädlingsbekämpfung erfüllen.

Zu den Maßnahmen, mit denen die Verkapselung unter Verwendung einer Emulsion bei dem erfindungsgemäßen Verfahren ermöglicht bzw. optimiert wird, zählt vor allem die Verwendung eines Stabilisators bei der Bereitstellung der Emulsion. In besonders bevorzugten Ausführungsformen des Verfahrens wird als Stabilisator Kieselsol verwendet. Durch den Stabilisator und insbesondere durch den Zusatz von Kieselsol kann die Emulsion derart stabilisiert werden, dass eine gute Vertropfung und Kapselbildung ermöglicht wird. Gleichzeitig wirkt sich der Zusatz des Stabilisators und insbesondere der Zusatz von Kieselsol positiv auf die Vitalität der Nematoden aus.

Bei Kieselsol handelt es sich um eine kolloidale Lösung von Kieselsäure (Siliciumdioxid) in Wasser. Herkömmlicherweise wird Kieselsol zur Klärung von Getränken verwendet, da es unerwünschte Trübstoffe in einer Flüssigkeit binden kann. Durch die Verwendung von Kieselsol bei der erfindungsgemäßen Herstellung der Matrixkapseln kann die Stabilität der Emulsion und damit das Ergebnis der Verkapselung deutlich verbessert werden.

In besonders bevorzugter Weise wird saures Spezialkieselsol eingesetzt. Saures Spezialkieselsol zeichnet sich dadurch aus, dass eine pH-Stabilisierung im sauren Bereich des Kieselsol vorliegt. In Versuchen der Erfinder hat sich herausgestellt, dass insbesondere saures Spezialkieselsol für die Herstellung der Nematoden-Matrixkapseln besonders vorteilhaft ist.

Vorzugsweise wird der Stabilisator und insbesondere das Kieselsol mit einem Anteil in der Emulsion von wenigstens 5 % (w/w) und höchstens 40 % (w/w) eingesetzt. Als besonders vorteilhaft hat sich ein Anteil in einem Bereich zwischen 10 und 25 % (w/w) und insbesondere ein Anteil in einem Bereich zwischen 15 und 20 % (w/w) erwiesen. Mit diesem bevorzugten Anteil des Stabilisators wird eine Homogenität und Viskosität des Nematodenansatzes eingestellt, die auf der einen Seite eine gute Prozessführung erlauben und die auf der anderen Seite sich positiv auf die Nematoden auswirken.

Insgesamt erlaubt das erfindungsgemäße Verfahren die Herstellung von verbesserten Nematoden-Matrixkapseln mit einer vorteilhaften Prozessführung, die im Vergleich mit Nematoden-Flüssigkernkapseln eine Reduzierung der Kosten und des Abfalls ermöglicht. Die Nematoden-Matrixkapseln selbst zeigen eine signifikante Verbesserung der mechanischen Belastbarkeit, eine verlängerte Lagerdauer und eine erhöhte Wirksamkeit gegenüber einem Testorganismus im Vergleich zu bisherigen Standardprodukten.

Die besonderen Vorteile der erfindungsgemäß herstellbaren Nematoden-Matrixkapseln zeigen sich insbesondere im Vergleich mit herkömmlichen Nematoden-Matrixkapseln, die keine Emulsion enthalten, sowie auch im Vergleich mit Nematoden-Flüssigkernkapseln, die eine Emulsion im Kern enthalten. Zudem sind die erfindungsgemäß herstellbaren Nematoden-Matrixkapseln einer herkömmlichen Gießapplikation aus den oben bereits genannten Gründen überlegen.

Im Vergleich mit herkömmlichen Nematoden-Matrixkapseln, die keine Emulsion enthalten, haben die erfindungsgemäß herstellbaren Nematoden-Matrixkapseln den Vorteil, dass sich die Emulsion sehr positiv auf die Vitalität der Nematoden auswirkt. Weiterhin wird durch den Ölanteil in den erfindungsgemäß herstellbaren Nematoden-Matrixkapseln die Gefahr einer kompletten Schrumpfung bzw. Vertrocknung der Kapseln im Vergleich mit herkömmlichen Matrixkapseln vermieden. Dies bietet Vorteile bei der Lagerung der Nematoden-Matrixkapseln und auch bei der Anwendung im Pflanzenschutz. Im Vergleich mit Nematoden-Flüssigkernkapseln mit einer Emulsion im Kern haben die erfindungsgemäß herstellbaren Nematoden-Matrixkapseln den besonderen Vorteil, dass die mechanische Stabilität der Nematoden-Matrixkapseln besser als bei Nematoden-Flüssigkernkapseln ist. Zudem ist der Herstellungsprozess für die Nematoden-Matrixkapseln einfacher und kostengünstiger als der Herstellungsprozess für die Nematoden-Flüssigkernkapseln. Weiterhin eignet sich das Verfahren sehr gut für ein Produktion in größerem Maßstab.

Die mit dem erfindungsgemäßen Verfahren herstellbaren Nematoden-Matrixkapseln vereinen die Vorteile einer Emulsion auf die verbesserte Vitalität der Nematoden in den Kapseln mit der besonders guten mechanischen Stabilität der Matrixkapseln. Im Vergleich mit Flüssigkernkapseln sind die erfindungsgemäß herstellbaren Kapseln in der Anwendung besser zu dosieren. Weiterhin sind die erfindungsgemäß herstellbaren Kapseln so stabil, dass sie gut mit mechanischen Systemen, z. B. Streugeräten, für eine Anwendung in der Schädlingsbekämpfung gehandhabt werden können.

Ein weiterer Vorteil der erfindungsgemäßen Matrixkapseln gegenüber Flüssigkernkapseln ist die verbesserte Eignung bei der automatisierten Verpackung mittels Dosier-, Form-, Füll- und/oder Verschließmaschinen, wie z. B. Schlauchbeutel-Maschinen. Bei einer automatisierten Verpackung von Flüssigkernkapseln kann bisher nicht ausgeschlossen werden, dass einige Kapseln zerplatzen, wodurch die Kernlösung austritt und die Maschinenoberflächen verunreinigt werden. In der Folge reduziert sich durch Anhaftungen die Rieselfähigkeit und damit die Dosiergenauigkeit. Auch erhöht sich dadurch der Reinigungsaufwand bei den Verpackungsmaschinen.

Demgegenüber sind die erfindungsgemäßen Matrixkapseln stärker mechanisch belastbar, werden also anteilig weniger beschädigt. Insbesondere tritt bei Beschädigung nur ein geringer Anteil der in der Matrix eingeschlossenen Emulsion aus. Die entstehenden Verunreinigungen und der damit einhergehende Reinigungsaufwand ist bei der automatisierten Verpackung der erfindungsgemäßen Matrixkapseln somit erheblich geringer.

Bei der wässrigen Komponente für die Emulsion kann es sich insbesondere um Wasser handeln, beispielsweise um Leitungswasser oder um aufbereitetes Wasser, beispielsweise entsalztes Wasser. Weiterhin eignen sich prinzipiell auch isotonische Salzlösungen, die vorzugsweise der physiologischen Osmolarität der Nematoden entsprechen. In bevorzugten Ausführungsformen kann das Wasser für die Emulsion mit Sauerstoff angereichert werden. Dies kann sich weiter vorteilhaft auf die Vitalität der Nematoden auswirken.

Bei der Ölkomponente als Bestandteil der Emulsion handelt es sich vorzugsweise um ein pflanzliches Öl. Unter einem pflanzlichen Öl ist dabei ein aus Samen, Früchten oder anderen Pflanzenteilen gewonnenes Lipidgemisch zu verstehen, das hauptsächlich aus Triglyceriden von Fettsäuren besteht. Ein pflanzliches Öl im Sinne der vorliegenden Beschreibung meint also kein ätherisches Öl.

Besonders geeignete Beispiele für pflanzliche Öle sind Sonnenblumenkernöl und/oder Rapskernöl und/oder Olivenöl. Besonders bevorzugt ist Sonnenblumenkernöl. Auch Kombinationen verschiedener Öle sind möglich.

Allgemein können vorzugsweise solche Öle verwendet werden, die bei Temperaturen ab circa 0 °C flüssig sind. Auch wenn der Einsatz der Nematoden-Matrixkapseln im Pflanzenschutz in der Regel bei höheren Temperaturen erfolgt, ist die Verwendung von Ölen, die bei niedrigeren Temperaturen noch flüssig sind, insbesondere im Hinblick auf die Lagerung der Nematoden-Matrixkapseln bei niedrigen Temperaturen, beispielsweise bei Kühlschranktemperaturen (4 - 10 °C), vorteilhaft für die Vitalität der Nematoden. Vorzugsweise werden solche Öle eingesetzt, die noch bei Temperaturen bis zu -15 °C oder bis zu -20 °C flüssig sind.

In bevorzugter Weise beträgt der Anteil der Ölkomponente in der Emulsion wenigstens 10 % (w/w). Vorzugsweise liegt der maximale Anteil der Ölkomponente in der Emulsion bei 60 % (w/w). In besonders bevorzugter Weise liegt der Anteil der Ölkomponente in der Emulsion in einem Bereich zwischen 20 und 50 % (w/w), vorzugsweise zwischen 30 und 40 % (w/w), besonders bevorzugt zwischen 30 und 35 % (w/w).

Die Emulsion selbst kann durch schnelles Rühren hergestellt werden. Besonders vorteilhaft ist die Verwendung einer Dissolverscheibe oder eines anderen Dispergiergerätes, beispielsweise eines ULTRA-TURRAX^{®} (IKA-Werke GmbH & Co. KG, Deutschland) oder ähnlicher Geräte.

Es ist besonders vorteilhaft, wenn die Emulsion mit dem Stabilisator durch den Zusatz von mindestens einem Verdickungsmittel weiter stabilisiert wird. Bevorzugte Beispiele für Verdickungsmittel sind pflanzliche Stärke und/oder pflanzliche Mehle. Ein besonders geeignetes Beispiel für eine pflanzliche Stärke ist handelsübliche Maisstärke. Ein besonders geeignetes Beispiel für ein pflanzliches Mehl ist Konjakmehl. Durch derartige Zusätze wird eine verbesserte Stabilität der Emulsion erreicht, welche für die weitere Verarbeitung vorteilhaft ist. Insbesondere kann durch den Zusatz derartiger Verdickungsmittel die Viskosität der Kernlösung und deren Homogenität optimal eingestellt werden, sodass eine gute Prozessführung mit gleichmäßiger Tropfenbildung bei guten Bedingungen für die Nematoden erreicht wird.

Vorzugsweise beträgt der Anteil des oder der Verdickungsmittel in der Emulsion wenigstens 0,1 % (w/w) und höchstens 2,0 % (w/w). Es können vorzugsweise zwei verschiedene Verdickungsmittel, insbesondere eine pflanzliche Stärke und ein pflanzliches Mehl, eingesetzt werden, wobei der Anteil des jeweiligen Verdickungsmittels jeweils zwischen 0,1 bis 0,3 % (w/w), vorzugsweise jeweils 0,2 % (w/w) beträgt. Mit besonderem Vorteil wird sowohl eine pflanzliche Stärke als auch ein pflanzliches Mehl zugesetzt, beispielsweise sowohl Maisstärke als auch Konjakmehl. Durch den Zusatz dieser Verdickungsmittel in den angegebenen Anteilen wird eine optimale Prozessführung erreicht. Auf der einen Seite ist der Nematodenansatz nicht zu flüssig, was sich nachteilig auf die Vitalität der Nematoden und nachteilig auf die Formgebung der zu bildenden Kapseln auswirken würde. Auf der anderen Seite ist der Nematodenansatz nicht zu viskos, was sich nachteilig auf die Prozessführung auswirken würde.

Bei dem Hydrogelbildner handelt es sich in besonders bevorzugter Weise um Alginat, insbesondere um Natriumalginat. Alginat ist besonders vorteilhaft, da es in Gegenwart entsprechender Ionen bei Raumtemperatur augenblicklich geliert bzw. vernetzt. Alginat hat neben seinen besonders geeigneten physikochemischen Eigenschaften auch den Vorteil, dass es als natürliches Produkt vollständig biologisch abbaubar ist. Prinzipiell können jedoch auch andere Hydrogelbildner verwendet werden. Beispielsweise kann alternativ Pektin als Hydrogelbildner eingesetzt werden.

Der Anteil des Hydrogelbildners bezogen auf den gesamten Nematodenansatz beträgt vorteilhafterweise wenigstens 0,5 % (w/w) und höchstens 10 % (w/w), bevorzugt wenigstens 0,5 % (w/w) und höchstens 3 % (w/w). Besonders gute Ergebnisse bei der Verkapselung wurden mit 1 % (w/w) des Hydrogelbildners, insbesondere mit 1 % (w/w) Alginat, vorzugsweise Natriumalginat, erzielt.

In besonders bevorzugten Ausgestaltungen des erfindungsgemäßen Verfahrens wird der Emulsion Glycerin zugesetzt. Glycerin wirkt sich vorteilhaft auf die Lagerfähigkeit der Nematoden aus. Es bewirkt eine Herabsetzung der Stoffwechselaktivität der Nematoden und einen damit verbundenen verringerten Energiebedarf der Nematoden. Dadurch können die erfindungsgemäß verkapselten Nematoden z. B. länger gelagert werden und auch die Freisetzung im Boden verzögert sich, was bei einer prophylaktischen Anwendung vorteilhaft ist.

In besonders bevorzugten Ausgestaltungen des erfindungsgemäßen Verfahrens beträgt der Anteil von Glycerin bezogen auf den gesamten Nematodenansatz wenigstens 2 % (w/w) und höchstens 25 % (w/w). Besonders bevorzugt ist ein Anteil des Glycerins in einem Bereich von 5 % (w/w) bis 10 % (w/w), weiter besonders bevorzugt in einem Bereich von 5 % (w/w) bis 8 % (w/w), insbesondere 6,5 % (w/w).

Nach der Bereitstellung der Emulsion und dem Zusetzen des Hydrogelbildners und des Glycerins werden die Nematoden zugesetzt. In bevorzugten Ausführungsformen des erfindungsgemäßen Verfahrens werden pro 1 kg Nematodenansatz zwischen 1 - 10 x 10⁶ Nematoden zugesetzt, vorzugsweise 4 - 6 x 10⁶ Nematoden, besonders bevorzugt 5 x 10⁶ Nematoden.

Für die Herstellung der Matrixkapseln können prinzipiell handelsübliche Nematodenprodukte eingesetzt werden, die beispielsweise mit Diatomeenerde als Träger oder anderen Trägermaterialien angeboten werden. Auch Nematodenprodukte auf der Basis von Öl können für die erfindungsgemäßen Matrixkapseln eingesetzt werden. Besonders geeignet ist die Verwendung einer Nematodenpaste, die aus einer Fermenterproduktion gewonnen wird. Je nach Art des jeweiligen Nematodenproduktes können die Nematoden gegebenenfalls beispielsweise mit Wasser aufgeschwemmt oder direkt verwendet. Die Nematoden werden dann mit der vorab hergestellten Emulsion plus Hydrogelbildner und gegebenenfalls Glycerin gemischt, bis eine homogene Mischung entsteht. Die so hergestellte Mischung wird im Rahmen dieser Beschreibung als Nematodenansatz bezeichnet.

Als entomopathogene Nematoden in den erfindungsgemäß herstellbaren Matrixkapseln kommen verschiedene Nematoden infrage. Besonders geeignet sind beispielsweise die Arten *Steinernema carpocapsae* und/oder *Steinernema feltiae* und/oder *Steinernema kraussei* und/oder *Heterorhabditis bacteriophora* und/oder *Heterorhabditis downesi* und/oder *Phasmarhabditis hermaphrodita.* Diese Nematoden haben sich in der biologischen Schädlingsbekämpfung bereits bewährt und können in sehr effektiver Weise zur Bekämpfung verschiedener Schädlinge eingesetzt werden. Die folgende Tabelle fasst die verschiedenen Anwendungsbereiche und die dort anzutreffenden Schädlinge im Hinblick auf die zu deren Bekämpfung geeigneten Nematodenarten zusammen.

| **Anwendungsbereich** | **Schädling** | **Nematodenart** |
|---|---|---|
| Rasen | Gartenlaubkäfer, Junikäfer, Maikäfer (Engerlinge) | *Heterorhabditis bacteriophora* |
| | Wiesenschnake (Made) | *Heterorhabditis downesi* |
| Öffentliches Grün | Eichenprozessionsspinner | *Steinernema feltiae* |
| Baumschulen | Dickmaulrüssler, Gartenlaubkäfer (Engerlinge) | *Heterorhabditis bacteriophora* |
| | | *Heterorhabditis downesi* |
| | | *Steinernema kraussei* |
| Obstbau | Apfelwickler (Raupe) | *Steinernema feltiae* |
| Gemüse-, Kräuter- und Zierpflanzenanbau | Eulen-/Nachtfalter (Raupe) | *Steinernema feltiae* |
| | Trauermücke (Made) | *Steinernema carpocapsae* |
| | Thripse (Larve, Puppe) | |
| | Acker-/Wegschnecken | *Phasmarhabditis hermaphrodita* |
| Maisanbau | Maiswurzelbohrer (Engerling) | *Heterorhabditis bacteriophora* |

Die erfindungsgemäßen Matrixkapseln können beispielsweise mit besonderem Vorteil für die Verkapselung von *Steinernema feltiae* und/oder *Steinernema carpocapsae* eingesetzt werden, die zur Bekämpfung von den Larven der Trauermücken oder den Larven und Puppen von Thripsen verwendet werden.

Nach dem Zusatz der Nematoden zu der Emulsion wird der resultierende Nematodenansatz in die Vernetzungslösung eingetropft, wobei die Vernetzungslösung vorzugsweise Ionen enthält. Die Kapselbildung basiert auf dem Prinzip der ionischen Gelierung. Wenn der Ansatz mit dem Hydrogelbildner in eine Lösung mit Ionen (Vernetzungslösung) eingetropft wird, vernetzen sich die Polymere des Hydrogelbildners zu einem Netzwerk bzw. einem Gel, sodass es zu einer Kapselbildung kommt. Die Vernetzung resultiert dabei aus einem Ionenaustausch, bei dem die Ionen des Hydrogels durch Ionen der Vernetzungslösung ersetzt werden, wodurch eine dreidimensionale Polymermatrix gebildet wird. Bei dem erfindungsgemäßen Verfahren kommt es zu einer durchgehenden Gelierung der Kapseln, sodass es sich bei den gebildeten Kapseln um Matrixkapseln handelt.

In bevorzugten Ausführungsformen des Verfahrens enthält die Vernetzungslösung zweiwertige Ionen, insbesondere Calciumionen. Calciumionen eignen sich vor allem für eine Vernetzung von Alginatmolekülen. Bei Verwendung von Natrium-Alginat resultiert die Vernetzung dabei aus einem Ionenaustausch der einwertigen Natriumionen des Alginats durch die zweiwertigen Calciumionen aus der Vernetzungslösung. Beispielsweise eignet sich eine 1 % (w/v) Calciumchlorid- oder 4 % (w/v) Calciumlactat-Lösung in Wasser als Vernetzungslösung.

Nach der Ausbildung der Kapseln können die Kapseln abgesiebt und gegebenenfalls gewaschen werden, insbesondere mit Wasser.

In bevorzugten Ausgestaltungen des erfindungsgemäßen Verfahrens werden die gebildeten Kapseln nach ihrer Herstellung angetrocknet. Die Trocknung kann beispielsweise in einem Luftzug erfolgen. Vorzugsweise kann die Trocknung derart erfolgen, dass das Kapselgewicht um circa 20 - 40 %, vorzugsweise um circa 30 % reduziert wird.

Das erfindungsmäße Verfahren erlaubt eine Steuerung der Kapselgröße und des Gewichts der Kapseln sowie eine Einstellung der Nematodenbeladung der Kapseln, sodass die Matrixkapseln an verschiedene Anwendungen angepasst werden können.

Die Erfindung umfasst weiterhin Nematoden-Matrixkapseln, die gemäß dem beschriebenen Verfahren herstellbar sind.

Insbesondere zeichnen sich die erfindungsgemäßen Nematoden-Matrixkapseln dadurch aus, dass die Nematoden in einer Emulsion innerhalb einer Trägermatrix aus einem Hydrogel, insbesondere einem Alginatgel, eingebettet sind.

Die erfindungsgemäßen Nematoden-Matrixkapseln zeichnen sich weiterhin dadurch aus, dass sie die bei der oben beschriebenen Herstellung der Kapseln verwendeten Substanzen enthalten. Insbesondere enthalten die Nematoden-Matrixkapseln in bevorzugten Ausführungsformen die folgenden Inhaltsstoffe:
- Nematoden
- Öl, insbesondere ein pflanzliches Öl, vorzugsweise Sonnenblumenöl
- Kieselsol, insbesondere saures Spezialkieselsol
- einen Hydrogelbildner, insbesondere Alginat
- gegebenenfalls Glycerin
- gegebenenfalls Verdickungsmittel, z. B. Maisstärke und/oder Konjakmehl

In bevorzugter Weise sind in den einzelnen erfindungsgemäßen Matrixkapseln im Durchschnitt etwa 500 bis 15.000 Nematoden pro Matrixkapsel enthalten. Besonders bevorzugt sind etwa 1.500 bis 3.500 Nematoden pro Matrixkapsel, beispielsweise 2.000 bis 2.500 Nematoden pro Matrixkapsel. Es kann auch bevorzugt sein, dass weniger Nematoden pro Matrixkapsel enthalten sind, beispielsweise zwischen 500 und 1.500 Nematoden pro Matrixkapsel. Wenn die Nematoden beispielsweise in Pflanztöpfe ausgebracht werden sollen, kann es vorteilhaft sein, mehr Kapseln mit jeweils weniger Nematoden als nur wenige Kapseln mit jeweils vielen Nematoden zu verwenden. Der Hintergrund dabei ist, dass es beispielsweise bei einer maschinellen Ausbringung passieren kann, dass die vorgesehene Anzahl von auszubringenden Kapseln nicht genau getroffen wird. Umso mehr Nematoden in der einzelnen Kapsel enthalten sind und umso weniger Kapseln für die vorgesehene Dosierung ausgebracht werden sollen, umso größer ist die Dosierungsabweichung, wenn eine Kapsel zu viel oder zu wenig ausgebracht wird. Vor diesem Hintergrund kann beispielsweise eine Anzahl von 1.500 bis 2.000 Nematoden, insbesondere circa 1.600 Nematoden pro erfindungsgemäßer Matrixkapsel besonders bevorzugt sein. Allgemein gilt, dass eine genaue Zählung und Dosierung der Nematoden in der Praxis schwierig sind, sodass diese Angaben gewissen Schwankungen unterliegen und beispielsweise mit mittleren Abweichungen ± 20 % zu verstehen sind. Gegebenenfalls können die Abweichungen auch höher sein.

Die erfindungsgemäßen Matrixkapseln können im Durchschnitt beispielsweise einen Durchmesser zwischen 1 bis 30 mm aufweisen, vorzugsweise zwischen 3 bis 10 mm oder zwischen 5 bis 10 mm. Umso größer die Kapseln sind, umso mehr Nematoden können in den Matrixkapseln im Allgemeinen enthalten sein. Wie bereits im Zusammenhang mit der Anzahl der Nematoden pro Matrixkapsel erläutert wurde, kann es auch in Bezug auf die Größe der Matrixkapseln vorteilhaft sein, die Kapseln verhältnismäßig klein zu gestalten, sodass mögliche Dosierungsfehler minimiert werden. Eine besonders bevorzugte Größe der Matrixkapseln vor diesem Hintergrund ist ein Durchmesser von 3 bis 6 mm bzw. von 4,5 ± 1,5 mm. Die Größe der Kapseln kann ohne Weiteres in dem Herstellungsprozess der Matrixkapseln gesteuert werden, wie es nachfolgend im Zusammenhang mit dem Herstellungsverfahren für die erfindungsgemäßen Matrixkapseln noch näher erläutert werden wird.

Vorzugsweise beträgt das Gewicht pro erfindungsgemäßer Matrixkapsel im Durchschnitt zwischen 10 bis 100 mg, vorzugsweise zwischen 20 und 80 mg, insbesondere zwischen 40 bis 80 mg. Besonders bevorzugt ist ein Gewicht in einem Bereich von 40 bis 60 mg pro Matrixkapsel, besonders bevorzugt etwa 50 mg pro Matrixkapsel. Diese Angaben beziehen sich jeweils auf das Feuchtgewicht. Auch das Gewicht der erfindungsgemäßen Matrixkapseln kann im Zuge des Herstellungsverfahrens der Matrixkapseln variiert werden und damit an verschiedene Applikationsarten der Matrixkapseln angepasst werden. Mit der Größe und dem Gewicht kann auch die Anzahl der Nematoden pro Matrixkapsel bzw. die Beladung der Matrixkapseln mit Nematoden anwendungsspezifisch angepasst werden. So können beispielsweise Matrixkapseln, die in einzelne Pflanztöpfe, beispielsweise per Hand, eingebracht werden, größer ausgestaltet werden und mehr Nematoden enthalten als Matrixkapseln, die beispielsweise mechanisch mit einem Streugerät auf einer großen Fläche verteilt werden. So eignen sich größere Matrixkapseln im Allgemeinen für die Dosierung von einzelnen oder wenigen Kapseln, beispielsweise bei drei Kapseln pro Pflanztopf. Im Hinblick auf die Verringerung von Dosierungsfehlern insbesondere bei einer maschinellen Ausbringung der Kapseln können kleinere Kapseln gegenüber größeren Kapseln bevorzugt sein.

Zur Verwendung in der Schädlingsbekämpfung werden die erfindungsgemäßen Nematoden-Matrixkapseln zweckmäßigerweise auf oder in das Pflanzsubstrat eingebracht. Die Einbringung kann auf verschiedene Weise erfolgen. Im einfachsten Fall werden die Matrixkapseln manuell aufgestreut und gegebenenfalls in das Substrat eingearbeitet oder durch eine weitere aufgestreute Substratschicht bedeckt. Beispielsweise können die erfindungsgemäßen Matrixkapseln in die oberen zehn Zentimeter der Substratschicht eingearbeitet werden. Im Allgemeinen ist es vorteilhaft, wenn die Matrixkapseln gleichmäßig in der Substratschicht verteilt werden. Zur Ein- oder Aufbringung der erfindungsgemäßen Matrixkapseln können auch technische Hilfsmittel eingesetzt werden, beispielsweise üblicherweise verwendete Pflanz- oder Düngertechnik, zum Beispiel Saatgeräte, Düngerstreuer, Düngerlanzen, Topfmaschinen oder Substratmischer. Durch ihre besondere Stabilität eignen sich die erfindungsgemäßen Matrixkapseln in besonderer Weise für eine Verarbeitung mit solchen technischen Hilfsmitteln.

In besonders vorteilhafter Weise können die erfindungsgemäßen Nematoden-Matrixkapseln bei einer Erstbehandlung auch bereits vor der Pflanzung oder Aussaat der Kultur in das Pflanzsubstrat eingemischt werden. Diese Vorgehensweise kann beispielsweise in der Kräuteranzucht mit großem Vorteil eingesetzt werden. Hierbei werden die Nematoden in Form der erfindungsgemäßen Matrixkapseln im Pflanzsubstrat quasi deponiert. Wenn dann nach ein bis zwei Wochen die Pflanzen gewachsen sind und die ersten Schädlinge auftreten, sind die entomopathogenen Nematoden bereits präsent. Auch hierin liegt ein besonderer Vorteil der erfindungsgemäßen Matrixkapseln, da die langfristige und verzögerte Freisetzung aus den Matrixkapseln über mehrere Wochen eine solche prophylaktische Behandlung erst ermöglicht.

Die Erfindung umfasst weiterhin ein Pflanzsubstrat, das die erfindungsgemäßen Matrixkapseln bereits enthält bzw. damit versetzt ist. Ein derartiges Pflanzsubstrat kann beispielsweise für das Ansäen und für das Ein- und Umtopfen von Gemüsepflanzen, Kräutern oder Zierpflanzen mit Vorteil eingesetzt werden, wobei ein aufkommender Schädlingsbefall sofort bekämpft wird. Dies ist insbesondere dann besonders vorteilhaft, wenn die Pflanzen bereits vor dem Ein- oder Umtopfen Kontakt mit Schädlingen hatten. Für die Einmischung der erfindungsgemäßen Matrixkapseln in ein Pflanzsubstrat eignen sich insbesondere erfindungsgemäße Matrixkapseln mit einer relativ hohen Nematodendichte.

Beispielsweise können hierfür Matrixkapseln mit circa 7.200 Tieren pro Matrixkapsel verwendet werden. Das entspricht etwa 50 Mio. EPN/kg Kapseln. Für die Herstellung des Pflanzsubstrats können die unterschiedlichen, an sich üblichen Bestandteile des Substrats (z.B. Weißtorf, Schwarztorf, Wasser, kohlensaurer Kalk, Dünger, Netzmittel) gemischt und anteilig mit beispielsweise circa 100 g Kapseln pro m³ Substrat versetzt werden.

Die Erfindung umfasst schließlich ein Verfahren zur Schädlingsbekämpfung, bei dem die erfindungsgemäßen Nematoden-Matrixkapseln in ein Pflanzsubstrat oder in einen Pflanzenbestand ausgebracht werden. Zudem umfasst die Erfindung die Verwendung der erfindungsgemäßen Nematoden-Matrixkapseln zur Schädlingsbekämpfung. Vorzugsweise werden bei diesem Verfahren bzw. der Verwendung die erfindungsgemäßen Nematoden-Matrixkapseln in einer Dosierung zwischen 1 - 1.000 Nematoden-Matrixkapseln pro m² Substratfläche verwendet. Vorzugsweise können zwischen 10 - 500 Nematoden-Matrixkapseln pro m² Substratfläche eingesetzt werden. Im Allgemeinen hängt die Dosierung der erfindungsgemäßen Matrixkapseln von deren Größe und deren Beladung mit Nematoden ab, die, wie oben ausgeführt, durch Anpassungen im Herstellungsverfahren entsprechend eingestellt werden können. So können die erfindungsgemäßen Matrixkapseln beispielsweise derart hergestellt werden, dass sich etwa 50 Mio. EPN in 1 kg Kapseln befinden. Rechnerisch beträgt hierbei die mittlere Kapselanzahl, je nach Beladung der einzelnen Kapseln mit EPN, etwa 6.900 Stück/kg. Im Mittel befinden sich dabei etwa 7.200 EPN in jeder Kapsel. Bei einer bevorzugten Aufwandmenge von 500.000 EPN/m² werden somit 10 g/m² oder dementsprechend 69 Stück/m² an Kapseln ausgebracht.

Allgemein hat die Verwendung von verkapselten Nematoden in der Schädlingsbekämpfung den besonderen Vorteil, dass sich die Kapseln besonders auf kleinen Flächen und in Einzeltöpfen genauer dosieren lassen als zum Beispiel mit einer herkömmlichen Gießanwendung. Hierdurch werden Unterdosierungen und Überdosierungen vermieden, wodurch sich auf der einen Seite die Wirksicherheit erhöht. Auf der anderen Seite ergeben sich durch die Vermeidung von Überdosierungen weitere Kostenvorteile. Ebenfalls im Vergleich mit beispielsweise einer herkömmlichen Gießapplikation von Nematoden sind die Nematoden in den erfindungsgemäßen Matrixkapseln besser vor Scherkräften geschützt. Auch treten keine Konzentrationsänderungen durch Absinken der Nematoden in der Formulierung auf. Weiterhin ist die verwendete Wassermenge bei der Applikation der Matrixkapseln wesentlich geringer als beispielsweise bei einer Gießanwendung. Des Weiteren verbleibt durch die Verkapselung das Wasser bzw. die flüssige Phase im direkten Umfeld der Nematoden und verteilt sich nicht im Boden wie bei einer Gießanwendung. Dadurch sind die Nematoden besser vor Austrocknung geschützt.

Die besonders stabile Form der erfindungsgemäßen Nematoden-Matrixkapseln bietet vor allem bei einer mechanisierten Ausbringung des Produktes Vorteile, da durch die gute Stabilität und die hierdurch mögliche Standardisierung des Produktes die Maschinengängigkeit, beispielsweise bei der Ausbringung mit Streugeräten, sehr gut ist.

Insgesamt erlauben die erfindungsgemäßen Matrixkapseln ein Verfahren zur Schädlingsbekämpfung, das erhebliche Vorteile bietet. Im Vergleich mit einer herkömmlichen Gießanwendung wird die Anzahl der notwendigen Behandlungen reduziert und damit der Arbeitsaufwand verringert. Mit den erfindungsgemäßen Matrixkapseln werden ein erhöhter Wirkungsgrad und eine erhöhte Wirksicherheit erreicht. Besonders bevorzugte Anwendungsbereiche finden sich insbesondere im gewerblichen Anbau beispielsweise von Kräutern und Zierpflanzen, beispielsweise Orchideen oder Poinsettien. Auch im Hobbybereich, insbesondere bei Kübelpflanzen, können die erfindungsgemäßen Matrixkapseln mit besonderem Vorteil eingesetzt werden. Hierbei können die Matrixkapseln entweder erst nach Auftreten eines Befalls oder bereits schon prophylaktisch, zum Beispiel mit der Aussaat oder dem Einpflanzen der jeweiligen Pflanzen, durch Einmischung in das Pflanzsubstrat ausgebracht werden. Vorzugsweise kann hierfür auch ein Pflanzsubstrat verwendet werden, in das die erfindungsgemäßen Nematoden-Matrixkapseln bereits eingemischt sind.

Die erfindungsgemäßen Nematoden-Matrixkapseln gewährleisten für eine biologische Schädlingsbekämpfung einen kontinuierlichen Vorrat an Nematoden im Pflanzsubstrat und damit einen effektiven Schutz des Pflanzenbestandes über mehrere Wochen. Da die Nematoden über einen längeren Zeitraum kontinuierlich aus den erfindungsgemäßen Matrixkapseln austreten können, ist eine Langzeitwirkung bei der Anwendung dieser Matrixkapseln gegeben. Der Aufbau der Kapseln führt insbesondere in Folge des vorhandenen Öls zu einer verzögerten Austrocknung der Nematoden, sodass lebende und aktive Nematoden über Wochen aus den erfindungsgemäßen Matrixkapseln austreten können und kontinuierlich freigesetzt werden. Darüber hinaus bieten die erfindungsgemäßen Matrixkapseln eine gute mechanische Stabilität, die eine einfache Handhabung und eine gute Lagerfähigkeit erlauben.

In besonders bevorzugter Weise werden die erfindungsgemäßen Nematoden-Matrixkapseln in einer Verpackungseinheit mit circa 50 Millionen EPN bereitgestellt. Die 50 Millionen EPN können dabei in circa 30.000 Einzelkapseln verkapselt sein und als Verpackungseinheit mit einem Feuchtgewicht von circa 1,1 kg bereitstellt werden. Pro Kapsel sind in diesem Fall etwa 2.400 bis 2.600 EPN enthalten. Eine solche Verpackungseinheit ist im Allgemeinen für die Behandlung einer Kulturfläche von circa 100 m² oder für circa 2,5 m³ Pflanzsubstrat oder für die Behandlung von circa 5.000 Pflanztöpfen mit einem max. Füllvolumen von 1 l ausreichend. Diese Dosierungsangaben eignen sich insbesondere für einen leichten Anfangsbefall oder eine vorbeugende Behandlung. Je nach Schädlingsbefall und Kulturführung kann eine abweichende Dosierung, insbesondere eine Erhöhung der Dosierung, vorteilhaft sein.

Eine Lagerung der Nematoden-Matrixkapseln vor ihrer Ausbringung erfolgt vorzugsweise gekühlt.

Bei der Einmischung der erfindungsgemäßen Matrixkapseln in ein Pflanzsubstrat ist eine gleichmäßige Verteilung der Matrixkapseln vorteilhaft. Wenn die Matrixkapseln direkt auf das Pflanzsubstrat aufgegeben werden, ist es vorteilhaft, die Matrixkapseln mit Pflanzsubstrat zu bedecken, beispielsweise mit einer Schichtdicke von mindestens 2 cm.

Wenn die Einbringung der Matrixkapseln direkt in einen Pflanztopf erfolgen soll, können beispielsweise im Mittel 4 - 5 Kapseln (entspricht circa 10.000 Nematoden) für einen Pflanztopf mit einem max. Füllvolumen von 1 l verwendet werden. Die Dosierung kann beispielsweise mit einem Dosierlöffel mit circa 1 ml Volumen vorgenommen werden.

Da die Herstellung der erfindungsgemäßen Matrixkapseln eine Anpassung der Beladung der Nematoden pro Kapsel erlaubt, kann die Beladung der Matrixkapseln mit Nematoden an die gewünschte auszubringende Kapselanzahl angepasst werden. Wenn beispielsweise in ein Pflanzgefäß (zum Beispiel 12 x 12 x 12 cm), von denen etwa 70 Stück auf einem Quadratmeter stehen, jeweils drei Matrixkapseln eingebracht werden sollen, werden circa 210 Kapseln/m² benötigt. Bei unverändertem Kapselgewicht und bevorzugter Aufwandmenge beträgt in diesem Fall die Konzentration in den Kapseln 16,5 Mio. EPN/kg oder 2.400 EPN/Stück.

Die Bodentemperatur bei der Ausbringung der erfindungsgemäßen Nematoden-Matrixkapseln sollte zweckmäßigerweise nicht unter 4 °C liegen. Beispielsweise können die erfindungsgemäßen Matrixkapseln mit gutem Erfolg ausgebracht werden, wenn die Bodentemperatur mindestens 8 - 12 °C beträgt. Auf der anderen Seite sollte im Allgemeinen die Bodentemperatur bei der Ausbringung nicht oberhalb von 34 °C liegen.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

In den Zeichnungen zeigen:

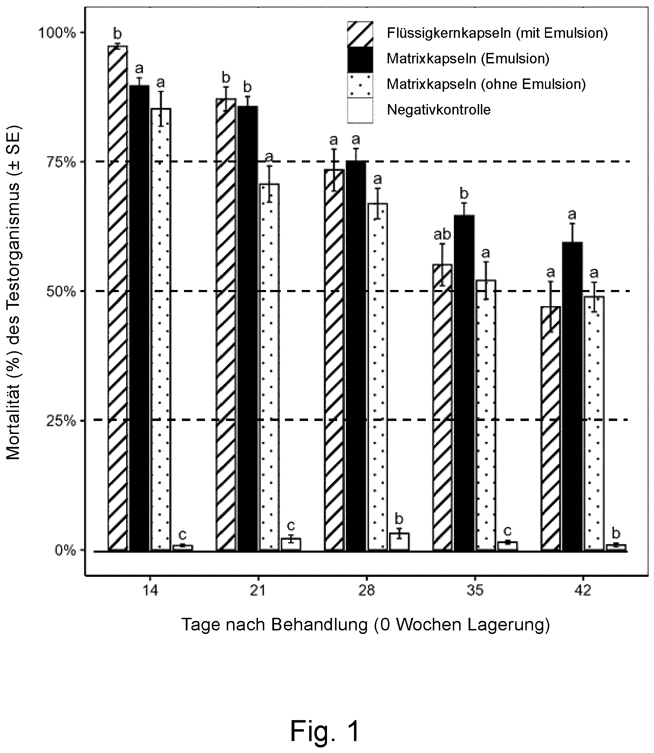

- Fig. 1: Wirkung auf die Mortalität eines Testorganismus nach Applikation der erfindungsgemäßen Nematoden-Matrixkapseln (mit Emulsion) im Vergleich mit herkömmlichen Nematoden-Matrixkapseln (ohne Emulsion) und Nematoden-Flüssigkernkapseln (mit Emulsion im Kern);

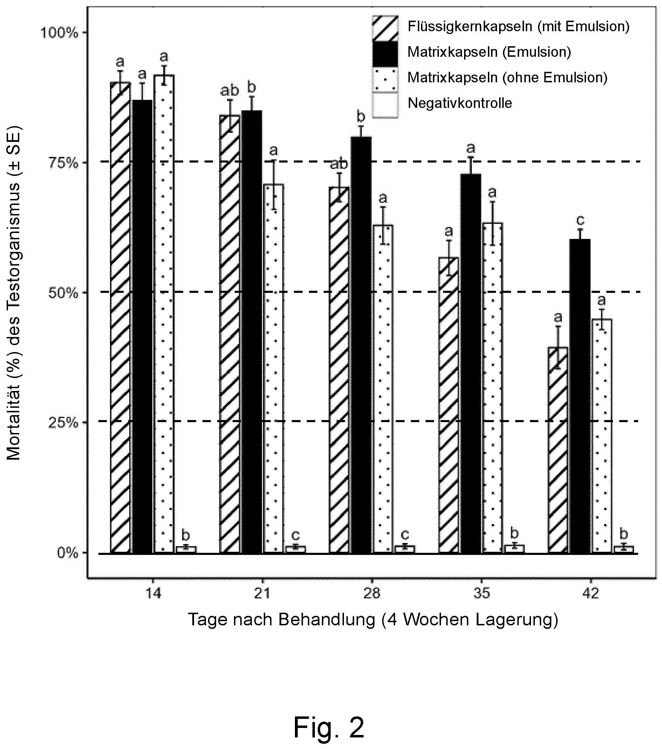

- Fig. 2: Wirkung auf die Mortalität eines Testorganismus nach Applikation der erfindungsgemäßen Nematoden-Matrixkapseln (mit Emulsion) im Vergleich mit herkömmlichen Nematoden-Matrixkapseln (ohne Emulsion) und Nematoden-Flüssigkernkapseln (mit Emulsion im Kern) nach vier Wochen Lagerung der Kapseln vor der Applikation;

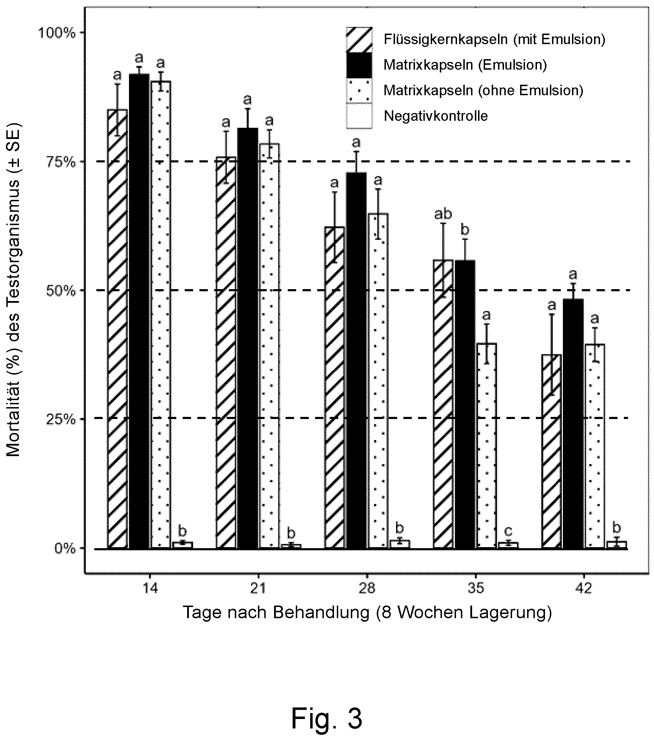

- Fig. 3: Wirkung auf die Mortalität eines Testorganismus nach Applikation der erfindungsgemäßen Nematoden-Matrixkapseln (mit Emulsion) im Vergleich mit herkömmlichen Nematoden-Matrixkapseln (ohne Emulsion) und Nematoden-Flüssigkernkapseln (mit Emulsion im Kern) nach acht Wochen Lagerung der Kapseln vor der Applikation; und

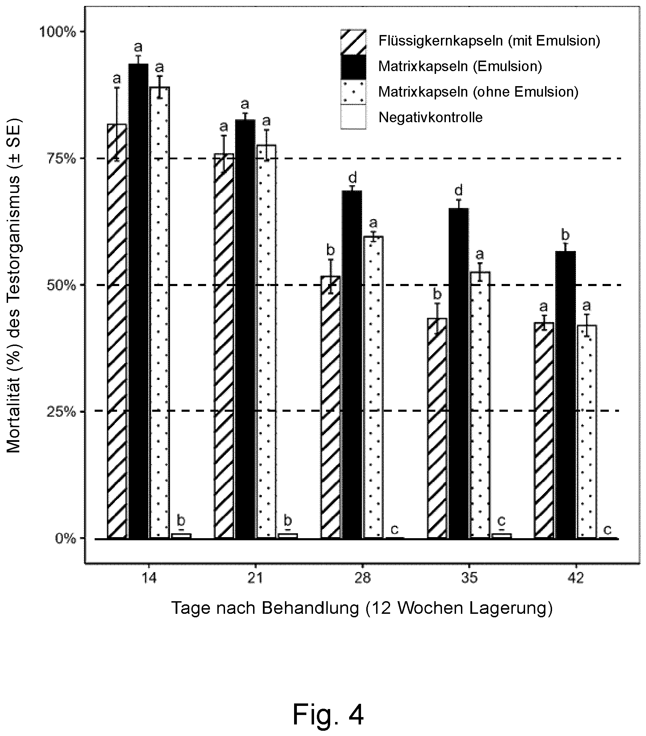

- Fig. 4: Wirkung auf die Mortalität eines Testorganismus nach Applikation der erfindungsgemäßen Nematoden-Matrixkapseln (mit Emulsion) im Vergleich mit herkömmlichen Nematoden-Matrixkapseln (ohne Emulsion) und Nematoden-Flüssigkernkapseln (mit Emulsion im Kern) nach zwölf Wochen Lagerung der Kapseln vor der Applikation.

### AUSFÜHRUNGSBEISPIELE

Zur Untersuchung der Eigenschaften der erfindungsgemäß hergestellten Nematoden-Matrixkapseln wurden die Nematoden-Matrixkapseln mit herkömmlichen Nematoden-Matrixkapseln (ohne Emulsion) und mit Nematoden-Flüssigkernkapseln (Emulsion im Kern) verglichen.

### 1. Herstellung der Nematodenkapseln

Bei dem Nematodenprodukt (*Steinernema feltiae*)*,* welches für die Herstellung der verschiedenen Kapseltypen verwendet wurde, handelte es sich um eine Nematodenpaste, die direkt aus einer Fermenterproduktion aufgearbeitet worden war. Diese Paste enthielt keine weiteren Zutaten zur Stabilisierung der Nematoden.

### 1.1. Herstellung der erfindungsgemäßen Nematoden-Matrixkapseln (mit Emulsion)

Für die Herstellung des Nematodenansatzes wurden für die Herstellung von etwa 1 kg Nematoden-Matrixkapseln 302 g Sonnenblumenkernöl, 160 g KlarSol Super^{®} (saures Spezialkieselsol) und 445 g Wasser eingewogen und eine Emulsion mittels Dissolverscheibe hergestellt. Zur Stabilisierung der Emulsion wurden handelsübliche Maisstärke und handelsübliches Konjakmehl zu je 0,2 Gew- % zugesetzt. Weiterhin wurde 1 Gew.-% Natriumalginat (E401) und 6,5 Gew.-% Glycerin zugesetzt. In die homogenisierte Emulsion wurde die Nematodenpaste (50 x 10⁶ Nematoden) bis zur Entstehung einer homogenen Mischung (Nematodenansatz) eingerührt.

Für eine Verkapselung des Nematodenansatzes im Labormaßstab wurden zwei handelsübliche Druckluftbehälter verwendet. In diese Druckluftbehälter wurde der Nematodenansatz eingefüllt. Über ein System von Druckschläuchen wurde der anfängliche Schlauchdurchmesser von 12 mm auf 6 mm reduziert. Dabei verzweigte sich das Schlauchsystem von einem Schlauch mit 12 mm Durchmesser auf acht Schläuche mit 6 mm Durchmesser. Jeder Schlauch bediente einen Düsenkopf mit vier Kapillaren. Die Vertropfung fand mittels 32 Einzeldüsen mit definiertem Innendurchmesser von ca. 0,8 mm statt. Zur Einstellung von unterschiedlichen Tropfengewichten konnten die Kapillaren ausgewechselt werden. Der Nematodenansatz für die erfindungsgemäßen Matrixkapseln wurde mittels Druckluft zu den 32 Einzeldüsen gefördert.

Die Vernetzung des Alginats fand in einem 20 Liter-Topf mit einem mechanischen Rührer mit Rührwelle statt. Die Vernetzungslösung bestand aus einer 1 Gew-% Calciumchloridlösung. Die Füllhöhe betrug ca. 2/3 des Topfvolumens. Die Rührgeschwindigkeit wurde so eingestellt, dass ein circa 4 cm tiefer Konus an der Rührwelle entstand und dieser sich bis zum Rand des Topfes erstreckte. Nach der Beendigung der Vertropfung wurde das Gemisch noch weitere 10 min gerührt.

Die Aufarbeitung erfolgte durch das Absieben der Kapseln durch ein Sieb mit einer Maschenweite von 1 mm. Die Kapseln wurden dabei intensiv mit Wasser abgespült, um sämtliche Reste der Calciumchloridlösung zu entfernen.

Anschließend wurden die Kapseln 30 min bei Raumtemperatur in einem Luftstrom von 150 m³/h getrocknet, um an der Oberfläche anhaftendes Wasser zu entfernen. Das Kapselgewicht reduzierte sich dabei um ca. 30 %.

Abschließend wurden die Kapseln zu je einer Einheit (50 x 10⁶ Nematoden, ca. 800 g) in eine Plastikschale eingeschweißt.

Für eine alternative Verkapselung im Pilotmaßstab wurde der Nematodenansatz mittels einer Förderpumpe zu vier Düsenköpfen transportiert. Das Eintropfen in die Vernetzungslösung (140 I, 1 Gew-% Calciumchlorid in Wasserlösung) erfolgte mittels 144 Einzeldüsen mit kapillaren Aufsätzen zum Einstellen der Tropfengrößen von 10 mg bis hin zu 150 mg. Die Aufarbeitung erfolgt mittels Waschstraße auf einem Förderband gefolgt von direktem Absieben der Kapseln, anschließendem oberflächigem Antrocknen und verpacken.

### 1.2. Herstellung der herkömmlichen Nematoden-Matrixkapseln (ohne Emulsion)

Zur Bereitstellung des Nematodenansatzes wurden für die Herstellung von etwa 1 kg herkömmlichen Matrixkapseln 10 g Natriumalginat (E401) in 990 g Wasser gelöst. In diese Lösung wurde die Nematodenpaste (50 x 10⁶ Nematoden) eingerührt.

Für eine Verkapselung des Nematodenansatzes im Labormaßstab wurden zwei handelsübliche Druckluftbehälter verwendet. In diese Druckluftbehälter wurde der Nematodenansatz eingefüllt. Über ein System von Druckschläuchen wurde der anfängliche Schlauchdurchmesser von 12 mm auf 6 mm reduziert. Dabei verzweigte sich das Schlauchsystem von einem Schlauch mit 12 mm Durchmesser auf acht Schläuche mit 6 mm Durchmesser. Jeder Schlauch bediente einen Düsenkopf mit vier Kapillaren. Die Vertropfung fand mittels 32 Einzeldüsen mit definiertem Innendurchmesser von ca. 0,8 mm statt. Zur Einstellung von unterschiedlichen Tropfengewichten konnten die Kapillaren ausgewechselt werden. Der Nematodenansatz für die herkömmlichen Matrixkapseln wurde mittels Druckluft zu den 32 Einzeldüsen gefördert.

Die Vernetzung des Alginats fand in einem 20 Liter-Topf mit einem mechanischen Rührer mit Rührwelle statt. Die Vernetzungslösung bestand aus einer 1 Gew-% Calciumchloridlösung. Die Füllhöhe betrug ca. 2/3 des Topfvolumens. Die Rührgeschwindigkeit wurde so eingestellt, dass ein ca. 4 cm tiefer Konus an der Rührwelle entstand und dieser sich bis zum Rand des Topfes erstreckte. Nach der Beendigung der Vertropfung wurde das Gemisch noch weitere 10 min gerührt.

Die Aufarbeitung erfolgte durch das Absieben der Kapseln durch ein Sieb mit einer Maschenweite von 1 mm. Die Kapseln wurden dabei intensiv mit Wasser abgespült, um sämtliche Reste der Calciumchloridlösung zu entfernen.

Anschließend wurden die Kapseln 30 min bei Raumtemperatur in einem Luftstrom von 150 m³/h getrocknet, um an der Oberfläche anhaftendes Wasser zu entfernen. Das Kapselgewicht reduzierte sich dabei um ca. 30 %.

Abschließend wurden die Kapseln zu je einer Einheit (50 x 10⁶ Nematoden, ca. 800 g) in eine Plastikschale eingeschweißt.

Für eine alternative Verkapselung im Pilotmaßstab wurde der Nematodenansatz mittels einer Förderpumpe zu vier Düsenköpfen transportiert. Das Eintropfen in die Vernetzungslösung (140 I, 1 Gew-% Calciumchlorid in Wasserlösung) erfolgte mittels 144 Einzeldüsen mit kapillaren Aufsätzen zum Einstellen der Tropfengrößen von 10 mg bis hin zu 150 mg. Die Aufarbeitung erfolgt mittels Waschstraße auf einem Förderband gefolgt von direktem Absieben der Kapseln, anschließendem oberflächigem Antrocknen und verpacken.

### 1.3. Herstellung der Nematoden-Flüssigkernkapseln (mit Emulsion im Kern)

Zur Herstellung des Nematodenansatzes für etwa 1 kg Flüssigkernkapseln wurden 302 g Sonnenblumenkernöl, 160 g Klar-Sol Super^{®} (saures Spezialkieselsol) und 445 g Wasser eingewogen und eine Emulsion mittels Dissolverscheibe hergestellt. Zur Stabilisierung der Emulsion wurde ein Emulgator (0,6 Gew.-% E405) zugesetzt. Weiterhin wurde 1 Gew.-% Calciumchlorid zugesetzt. In die homogenisierte Emulsion wurde die Nematodenpaste (50 x 10⁶ Nematoden) bis zur Entstehung einer homogenen Mischung (Nematodenansatz) eingerührt.

Die Herstellung der Flüssigkernkapseln (inverse Verkapselung) erfolgte durch Eintropfen des Nematodenansatzes (vier Düsenköpfe mit 144 Einzeldüsen, mit kapillaren Aufsätzen zum Einstellen der Tropfengrößen von 10 mg bis hin zu 150 mg) in eine Vernetzungslösung mit Natriumalginat (140 l Reaktionsvolumen: 1,1 Gew.-% Natriumalginat (E401) in Wasser). Die weitere Aufarbeitung erfolgte mittels eines Förderbands und Waschstraße. Die gewaschenen Kapseln wurden in einem 1%igem CaCl₂-Bad verfestigt, bevor die Kapseln mittels Vibrationssieb gesiebt und oberflächlich angetrocknet und abgepackt wurden.

### 2. Vergleichende Untersuchungen der erfindungsgemäßen Nematoden-Matrixkapseln (mit Emulsion) im Vergleich mit herkömmlichen Nematoden-Matrixkapseln (ohne Emulsion) und Nematoden-Flüssigkernkapseln (mit Emulsion im Kern) in ihrer Wirkung auf Mehlwürmer als Testorganismus

Es wurden Versuche zur Untersuchung der Wirkung der erfindungsgemäßen Nematoden-Matrixkapseln im Vergleich mit herkömmlichen Nematoden-Matrixkapseln und im Vergleich mit Nematoden-Flüssigkernkapseln durchgeführt. Die Herstellung der verschiedenen Kapseln erfolgte in der oben beschriebenen Weise.

Als Testorganismus wurden Mehlwürmer eingesetzt. Bei Mehlwürmern (Larven des Mehlkäfers *Tenebrio molitor*) handelt es sich um einen etablierten Testorganismus, um die Wirkung von entomopathogenen Nematoden (EPN) zu analysieren.

Für die Versuchsanordnung wurde jeweils 1 l Pflanzsubstrat (1:1 Erde-Sand-Gemisch) in Pflanzschalen eingeschüttet. Für die Applikation der verschiedenen Kapseln wurden jeweils 20 Kapseln mit jeweils insgesamt etwa 2.500 EPN in das jeweilige Substrat eingemischt. Als Negativkontrolle wurde das Substrat ohne weitere Zusätze verwendet. Es wurden jeweils 40 Mehlwürmer auf das jeweilige Substrat gesetzt. Die Raumtemperatur betrug gleichbleibend 22 ± 1 °C. Die Bodenfeuchte betrug gleichbleibend 60 % ± 10 %. Nach jeweils 14 Tagen, 21 Tagen, 28 Tagen, 35 Tagen und 42 Tagen wurden die Mehlwürmer ausgelesen und deren prozentuale Mortalität ermittelt. Anschließend wurden jeweils wieder 40 frische Mehlwürmer zugesetzt. Die Applikation der Nematoden-Kapseln erfolgte nur einmalig zum Zeitpunkt Null.

Es wurden vier Versuchsreihen mit allen drei Kapseltypen durchgeführt. Die Versuchsreihen unterschieden sich durch eine unterschiedlich lange Lagerung der Kapseln (gekühlt bei 8 °C), bevor die Kapseln in das Pflanzsubstrat gegeben wurden. Für die erste Versuchsreihe wurden die Kapseln ohne Lagerung verwendet. Für die zweite Versuchsreihe wurden die Kapseln nach einer Lagerung über vier Wochen, für die dritte Versuchsreihe nach einer Lagerung über acht Wochen und für die vierte Versuchsreihe nach einer Lagerung über zwölf Wochen verwendet. Die Versuche wurden jeweils mit fünf Replikaten durchgeführt und mehrfach zu unterschiedlichen Zeitpunkten im Jahr wiederholt.

Die in den Figuren dargestellten Diagramme zeigen den Verlauf der Wirksamkeit der getesteten Kapseltypen gegenüber dem Testorganismus. Es zeigt sich, dass die erfindungsgemäßen Nematoden-Matrixkapseln bei allen untersuchten Lagerzeiträumen die besten Wirkungsverläufe zeigten.

Die Fig. 1, 2, 3 und 4 zeigen die Versuchsergebnisse der vier Versuchsreihen. Die x-Achse gibt die Tage nach der Ausbringung der Nematoden-Kapseln in das Substrat an (Applikationsdauer), wobei sich die Versuchsansätze der Fig. 1 - 4 durch die jeweils unterschiedlich lange Lagerungszeit der Kapseln vor deren Applikation unterscheiden. Die y-Achse gibt die Mortalität des Testorganismus in % an. Die Buchstaben a, b, c und d über den Säulen geben die statistischen Signifikanzen (ANOVA-Test, p < 0,01) der beobachteten Mortalitäten an. Unterschiedliche Buchstaben bedeuten, dass sich die Werte statistisch signifikant von den anderen Werten in der Gruppe (n Tage nach Behandlung) unterscheiden. Beispielsweise unterscheidet sich a signifikant zu b, c, oder d, jedoch nicht zu ab. ab unterscheidet sich signifikant zu c, und d, jedoch nicht zu a oder b.

**Fig. 1** zeigt die Mortalität des Testorganismus nach der Applikation der drei Kapseltypen ohne Lagerung der Kapseln zu den angegebenen Zeitpunkten. Nach 14 Tagen lag bei den erfindungsgemäßen Matrixkapseln (mit Emulsion) und bei den herkömmlichen Matrixkapseln (ohne Emulsion) die Mortalität bei etwa 90 %. Die Flüssigkernkapseln (mit Emulsion im Kern) zeigten eine etwas bessere Mortalität von 95 %. Nach 21 Tagen sank die Mortalität bei den erfindungsgemäßen Matrixkapseln (mit Emulsion) und den Flüssigkernkapseln (mit Emulsion im Kern) auf etwa 80 %, wohingegen die Mortalität bei den herkömmlichen Matrixkapseln (ohne Emulsion) bereits auf 70 % sank. Dieser Abfall der Mortalität sank im weiteren Verlauf der Versuchsreihe weiter ab, wobei die erfindungsgemäßen Matrixkapseln (mit Emulsion) bei allen untersuchten Zeitpunkten eine bessere Mortalität erreichten als die anderen beiden Kapseltypen. Die Mortalität bei der Negativkontrolle lag in allen Fällen nur bei 1 - 2 %.

Ähnliche Ergebnisse ließen sich bei einer Lagerung für vier Wochen (**Fig. 2**) und bei einer Lagerung für acht Wochen (**Fig. 3**) und bei einer Lagerung für zwölf Wochen (**Fig. 4**) beobachten. In allen Fällen zeigte sich bei den erfindungsgemäßen Matrixkapseln (mit Emulsion) im Vergleich mit den herkömmlichen Matrixkapseln (ohne Emulsion) eine bessere Mortalität. Auch im Vergleich mit den Flüssigkernkapseln (mit Emulsion im Kern) waren die erfindungsgemäßen Matrixkapseln (mit Emulsion) insbesondere nach einer längeren Applikationsdauer überlegen. Im Vergleich der Versuchsreihen zeigte sich weiterhin auch die Überlegenheit der erfindungsgemäßen Matrixkapseln bei einer vorangegangenen langen Lagerungszeit.

Die erfindungsgemäßen Nematoden-Matrixkapseln können daher mit besonderem Vorteil in der Schädlingsbekämpfung eingesetzt werden. Vor allem zeigen die erfindungsgemäßen Nematoden-Matrixkapseln eine im Vergleich mit anderen Kapseln sehr gute Langzeitwirkung und eine gute Lagerungsstabilität.

Hinzu kommen insbesondere im Vergleich mit den Nematoden-Flüssigkernkapseln die besonderen Vorteile aufgrund der verbesserten mechanischen Stabilität der erfindungsgemäßen Nematoden-Matrixkapseln und die einfachere Prozessführung bei der Herstellung einschließlich den damit verbundenen günstigeren Herstellungskosten.

## Patentansprüche

1. Verfahren zur Herstellung von Nematoden-Matrixkapseln, wobei das Verfahren die folgenden Schritte umfasst:
a. Es wird eine Emulsion bereitgestellt, die eine Ölkomponente und eine wässrige Komponente sowie mindestens einen Stabilisator umfasst,
b. die Emulsion wird mit einem Hydrogelbildner versetzt,
c. die Emulsion wird mit Nematoden zur Bereitstellung eines Nematodenansatzes versetzt,
d. der Nematodenansatz wird in eine Vernetzungslösung zur Ausbildung der Nematoden-Matrixkapseln eingetropft.

2. Verfahren nach Anspruch 1, **dadurch gekennzeichnet, dass** der mindestens eine Stabilisator Kieselsol ist.

3. Verfahren nach Anspruch 1 oder Anspruch 2, **dadurch gekennzeichnet, dass** der Anteil des Stabilisators in der Emulsion wenigstens 5 % (w/w) und höchstens 40 % (w/w) beträgt.

4. Verfahren nach einem der vorhergehenden Ansprüche, **dadurch gekennzeichnet, dass** die Ölkomponente von mindestens einem pflanzlichen Öl, insbesondere von Sonnenblumenkernöl und/oder Rapskernöl und/oder Olivenöl, gebildet wird.

5. Verfahren nach einem der vorhergehenden Ansprüche, **dadurch gekennzeichnet, dass** der Anteil der Ölkomponente in der Emulsion wenigstens 10 % (w/w) und höchstens 60 % (w/w) beträgt.

6. Verfahren nach einem der vorhergehenden Ansprüche, **dadurch gekennzeichnet, dass** die Emulsion durch Zusatz von mindestens einem Verdickungsmittel weiter stabilisiert wird.

7. Verfahren nach Anspruch 6, **dadurch gekennzeichnet, dass** das mindestens eine Verdickungsmittel eine pflanzliche Stärke und/oder ein pflanzliches Mehl ist.

8. Verfahren nach Anspruch 5 oder Anspruch 6, **dadurch gekennzeichnet, dass** der Anteil des Verdickungsmittels in der Emulsion wenigstens 0,1 % (w/w) und höchstens 2,0 % (w/w) beträgt.

9. Verfahren nach einem der vorhergehenden Ansprüche, **dadurch gekennzeichnet, dass** der Anteil des Hydrogelbildners bezogen auf den gesamten Nematodenansatz wenigstens 0,5 % (w/w) und höchstens 10 % (w/w) beträgt.

10. Verfahren nach einem der vorhergehenden Ansprüche, **dadurch gekennzeichnet, dass** die Emulsion mit Glycerin versetzt wird.

11. Verfahren nach Anspruch 10, **dadurch gekennzeichnet, dass** der Anteil von Glycerin bezogen auf den gesamten Nematodenansatz wenigstens 2 % (w/w) und höchstens 25 % (w/w) beträgt.

12. Verfahren nach einem der vorhergehenden Ansprüche, **dadurch gekennzeichnet, dass** pro 1 kg Nematodenansatz zwischen 1 - 10 x 10⁶ Nematoden zugesetzt werden.

13. Nematoden-Matrixkapseln, herstellbar nach einem Verfahren gemäß einem der Ansprüche 1 bis 12.

14. Nematoden-Matrixkapseln nach Anspruch 13, **dadurch gekennzeichnet, dass** die Nematoden in einer Emulsion innerhalb einer Trägermatrix aus einem Hydrogel eingebettet sind.

15. Nematoden-Matrixkapseln nach Anspruch 13 oder Anspruch 14, **dadurch gekennzeichnet, dass** die Nematoden-Matrixkapseln zumindest die folgenden Komponenten umfassen: Nematoden, Öl, insbesondere ein pflanzliches Öl, vorzugsweise Sonnenblumenkern, Kieselsol, insbesondere saures Spezialkieselsol, einen Hydrogelbildner, insbesondere Alginat, und gegebenenfalls Glycerin und gegebenenfalls Verdickungsmittel.

16. Pflanzsubstrat, **dadurch gekennzeichnet, dass** es mit Nematoden-Matrixkapseln gemäß einem der Ansprüche 13 bis 15 versetzt ist.

17. Verfahren zur Schädlingsbekämpfung, **dadurch gekennzeichnet, dass** Nematoden-Matrixkapseln gemäß einem der Ansprüche 13 bis 15 in ein Pflanzsubstrat oder in einen Pflanzenbestand ausgebracht werden.
